# EUROPEAN PATENT APPLICATION

(11) **EP 4 215 834 A1**
(43) Date of publication of application: **26.07.2023**
(21) Application number: 22152900.1
(22) Date of filing: 24.01.2022
(51) Int. Cl.: F24H 1/00, B60H 1/22, F24H 1/12, F24H 3/04, F24H 9/00, F24H 9/13, F24H 9/14, F24H 9/1818, H05B 3/24

(54) **ELECTRIC FLUID HEATER**

(71) Applicant: VALEO AUTOKLIMATIZACE s.r.o., 26990 Rakovnik (CZ)
(72) Inventor: JURKIEWICZ, Damian, 32-050 SKAWINA (PL); WOZEK, Mateusz, 32-050 SKAWINA (PL)
(74) Representative: Valeo Systèmes Thermiques

(57) **Abstract**

The present invention discloses an electric fluid heater of a vehicle comprising a heater core having a tube bundle extending between a first header plate and a second header plate. The tube bundle has a first side and a second side opposite to that of the first side. The tube bundle further includes a first extreme tube and a second extreme tube. Further, each tube having a heating element therein. A shell having a fluid inlet and a fluid outlet encloses the heater core. The shell comprises a first shell portion and a second shell portion. The first shell portion extends between the header plates, and encloses the first side of the tube bundle and at least partially the first extreme tube. The second shell portion extends between the header plates and encloses the second side of the tube bundle and at least partially the second extreme tube.

## Description

The present invention generally relates to an electric fluid heater, more particularly to an electric fluid heater for vehicles.

Heat exchangers in vehicles are provided for various applications, for example, heating the ambient air in the passenger compartment, preheating the cooling water of water-cooled engines, pre-glowing the spark plugs in self-igniting internal combustion engines etc.

Particularly, vehicles such as battery-electric vehicles, plugin electric vehicles, or hybrid-electric vehicles, use an air-conditioning loop operating in heat pump mode for air heating. However, this mode of air heating can also be unsuitable or insufficient. This is because the performance of the air-conditioning circuit in heat pump mode depends on the outdoor climatic conditions. For example, when the outside air is too cold, the air cannot be heated to a temperature sufficient to warm the passenger compartment. In this context, it is known to add to the fluid circulation loops an additional electric device for thermal conditioning of the fluid such as an additional electric heating device. Such an additional electric heating device can be adapted to heat a suitable fluid upstream of the heat exchanger. In a known way, such an electric additional heating device comprises one or more thermal modules in contact with the fluid to be heated.

More precisely, and as may be disclosed in particular in document WO15082434, a thermal module may comprise a core and a heating element surrounding the core, both being spaced apart in order to define a fluid circulation space between the core and the inner surface of the heating element. The heating element is a source of thermal energy. The heating element has electric heating means, e.g. one or more heating resistors serigraphically formed as serigraphic resistive tracks on the outer surface of the heating element. A fluid circulation in the circulation space between the core and the heating element ensures heat transfer between the heating element and the fluid. In order to obtain sufficient heating power for the desired operation, it may be necessary to multiply the thermal modules in the same additional electric heating device. Fluid circulation is facilitated by a pump, which is arranged upstream or downstream of the heater on a fluid circulation pipe. The thermal module is then placed in a housing. The housing need to ensure proper sealing of the fluid circulating through the core and compact packaging for optimal heat exchange between the fluid and the heating element.

Accordingly, there remains a need for an electric heater having a compact housing that ensures no leakage, and optimize thermal efficiency.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of forgoing, the present invention discloses an electric fluid heater of a vehicle comprising a heater core having a tube bundle extending between a first header plate and a second header plate. The tube bundle has a first side and a second side opposite to that of the first side. The tube bundle further includes a first extreme tube and a second extreme tube. Further, each tube having a heating element therein defining a first heat exchange circuit.

The heater further comprises a shell having a fluid inlet and a fluid outlet that encloses the heater core. The shell further defines a second heat exchange circuit for a fluid intended to flow between the inlet and the outlet. The shell comprises a first shell portion and a second shell portion. The first shell portion extends between the header plates, and encloses the first side of the tube bundle and at least partially the first extreme tube. The second shell portion extends between the header plates and encloses the second side of the tube bundle and at least partially the second extreme tube.

In one embodiment, the tube bundle comprises a plurality of heat exchange tubes and the heat exchange tubes are arranged in a single row.

In one embodiment, the first shell portion and the second shell portion are distinct portions.

In one embodiment, at least one shell portion comprises one or more fastening means at a peripheral edge thereof to assemble the shell portions together.

In one embodiment, the fastening means comprise one or more crimping means to assemble the first shell portion together with the second shell portion.

In one embodiment, the first shell portion and the second shell portion are each made of a bent metal plate and the plates are brazed together.

In one embodiment, each shell portion comprises a first surface extending according to a first plane and a second surface extending according to a second plane perpendicular to the first plane thereby defining an L-shaped portion.

In one embodiment, each shell portion comprises at least two longer edges and at least two shorter edges, and at least one fastening mean is formed on each of the longer edge and the shorter edge of the shell portion. In another embodiment, at least one fastening mean is formed on at least one of the longer edge and the shorter edge of the shell portions.

In one embodiment, the fluid inlet and the fluid outlet are formed on one of the shell portions.

In another embodiment, the fluid inlet is formed on at least one shell portion, for example, the first shell portion and the fluid outlet is formed on at least one shell portion, for example, the second shell portion.

In one embodiment, each shell portion comprises an extension surface. The extension surface of the first shell portion is at least one longer edge of the first shell portion bent to lie perpendicular to the first surface of the first shell portion, and the extension surface of the second shell portion is at least one longer edge of the second shell portion bent to lie perpendicular to the second surface of the second shell portion.

In one embodiment, the crimping means comprises one or more crimping legs to crimp over the extension surfaces of shell portions.

The extension surface of the first shell portion contacts and lies in the same plane of at least one longer edge of the second shell portion and comprises one or more cut-out portions to receive the crimping legs of the second shell portion. The extension surface of the second shell portion contacts and lies in the same plane of at least one longer edge of the first shell portion and comprises one or more cut-out portions to receive the crimping legs of the first shell portion.

In one embodiment, the electric fluid heater is a coolant fluid heater.

In one embodiment, the present invention discloses a method of assembling the electric fluid heater. The method involves the step of providing the electric fluid heater having the heater core and the shell having at least two distinct shell portions. The two shell portions being the first shell portion and the second shell portion. The method involves the step of fastening the first shell portion and the second shell portion using the fastening means. The method ends with the step of brazing the first shell portion and the second shell portion for ensuring a fluid tight second heat exchange circuit.

In another embodiment, the present invention discloses an electric fluid heater. The heater core having a tube bundle extending between a first header plate and a second header plate. The tube bundle has a first side and a second side opposite to that of the first side. The tube bundle further comprises a first extreme tube and a second extreme tube, and each tube element having a heating element therein defining a first heat exchange circuit. The heater device further comprises a shell having a fluid inlet and a fluid outlet. The shell encloses the heater core and defines a second heat exchange circuit for a fluid intended to flow between the inlet and the outlet. The shell comprises a first shell portion and a second shell portion. and each portion (112, 114) having a L-shaped configuration The first shell portion extends between the header plates and encloses the first side of the tube bundle and at least partially the first extreme tube. The second shell portion extends between the header plates and encloses the second side of the tube bundle and at least partially the second extreme tube.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG.1 exemplarily illustrates a perspective view of an electric fluid heater, according to an embodiment of the present invention;
FIG. 2 exemplarily illustrates a perspective view of a heater core of the electric fluid heater of FIG. 1;
FIG. 3 exemplarily illustrates an exploded view of the electric fluid heater of FIG. 1;
FIG. 4 exemplarily illustrates an exploded view of a shell and header plates of the heater of FIG. 1;
FIG. 5 exemplarily illustrates a perspective view of a first shell portion enclosing at least a portion of the heater core of the heater of FIG. 1;
FIG. 6 exemplarily illustrates another perspective view of the first shell portion enclosing at least a portion of the heater core of the heater of FIG. 1;
FIG. 7 exemplarily illustrates a perspective view of a second shell portion enclosing at least a portion of the heater core of the heater of FIG. 1, and
FIG. 8 exemplarily illustrates a perspective view of a heating module disposed within a heat exchange tube of the heater of FIG. 1.

It must be noted that the figures disclose the invention in a detailed enough way to be implemented, said figures helping to better define the invention if needs be. The invention should however not be limited to the embodiment disclosed in the description.

The present invention discloses an electric fluid heater of a vehicle. The heater comprises a heater core having a tube bundle extending between a first header plate and a second header plate. The tube bundle has a first side and a second side opposite to that of the first side. The tube bundle further includes a first extreme tube and a second extreme tube. The heater further comprises a shell having a fluid inlet and a fluid outlet that encloses the heater core. The shell further defines a second heat exchange circuit for a fluid intended to flow between the inlet and the outlet. The shell comprises a first shell portion and a second shell portion. The first shell portion extends between the header plates, and encloses the first side of the tube bundle and at least partially the first extreme tube. The second shell portion extends between the header plates and encloses the second side of the tube bundle and at least partially the second extreme tube. The first shell portion and second shell portion has an L-shaped configuration and assembled to one another to form a tubular structure. At least two open ends of the tubular structure engages with the respective header plates. Thereby the present invention form a compact shell with a leak proof configuration.

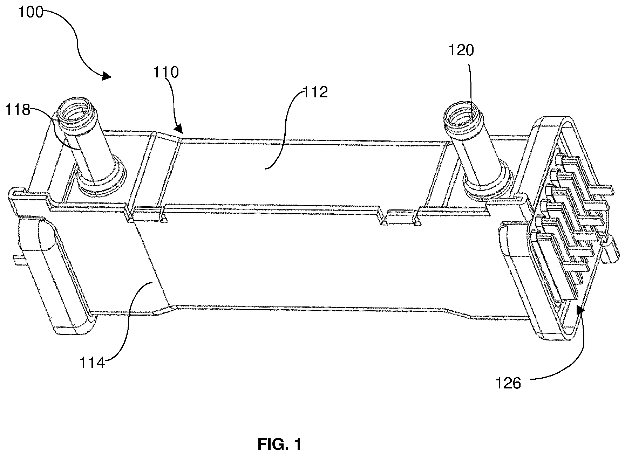

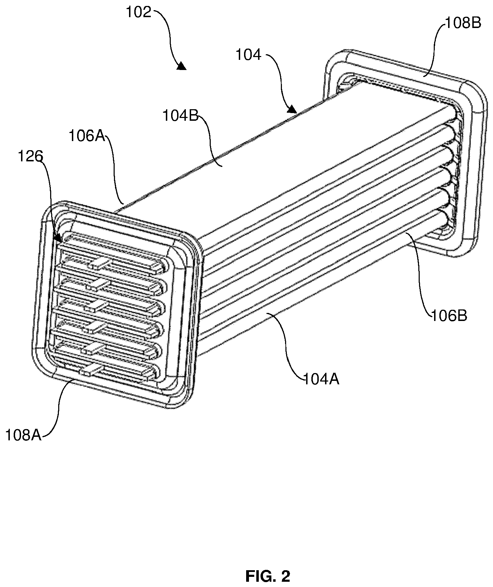

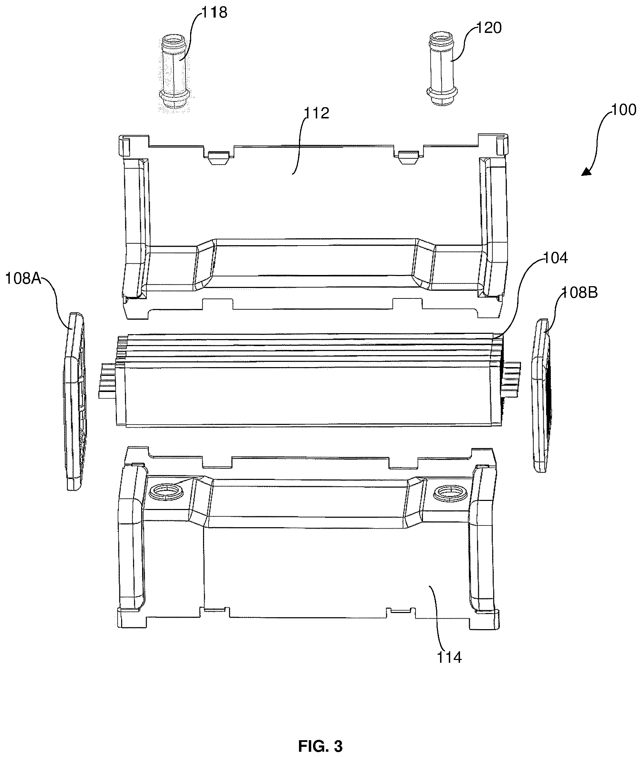

FIG. 1 exemplarily illustrates a perspective view of an electric fluid heater 100, according to an embodiment of the invention. FIG. 2 exemplarily illustrates a perspective view of a heater core 102 of the electric fluid heater 100 of FIG. 1. FIG. 3 exemplarily illustrates an exploded view of the electric fluid heater 100 of FIG. 1. In one embodiment, the electric fluid heater 100 is a coolant fluid heater. The heater 100 comprises the heater core 102 including a tube bundle 104 extending between at least two header plates 108A, 108B and a shell 110 enclosing the heater core 102. At least two header plates 108A, 108B includes a first header plate 108A and a second header plate 108B.

The tube bundle 104 comprises a plurality of heat exchange tubes 104. In this embodiment, the heat exchange tubes 104 are flat tubes arranged in a single row. The plurality of tubes 104 may be arranged in a square or a rectangular pattern. In another embodiment, the plurality of tubes 104 may be arranged in different patterns. The tubes 104 may be made from any suitable material such as a thin-walled metal like aluminium, steel, or copper. Further, the tube bundle 104 includes a first side 106A and a second side 106B opposite to that of the first side 106A. Each tube 104 has a first end and a second end. The header plates 108A, 108B comprises plurality of apertures 122 and each aperture 122 aligned to one corresponding tube 104. The header plates 108A, 108B are relatively thick plates made of a metallic material like steel or aluminium.

The first end of the heat exchange tube 104 is received within a corresponding aperture 122 of the first header plate 108A and the second end of the heat exchange tube 104 is received within a corresponding aperture 122 of the second header plate 108B. The tubes 104 may can be welded, brazed or otherwise joined to the header plates 108A, 108B to align with their respective apertures 122. In the illustrated embodiment, the apertures 122 are oblong slots but, in other embodiments, could have other shapes. Each tube 104 includes a heating module 126 therein defining a first heat exchange circuit. In one embodiment, the first heat exchange circuit is an electrical circuit.

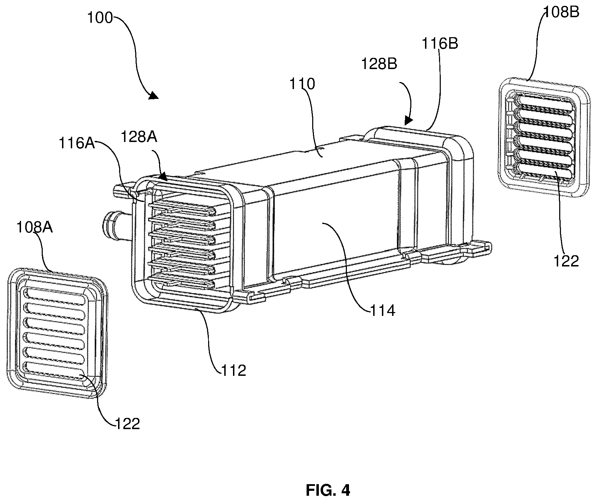

FIG. 4 exemplarily illustrates the exploded view of the shell 110 and header plates 108A, 108B of the heater 100 of FIG. 1. The shell 110 further includes a fluid inlet 118 and a fluid outlet 120 adapted to connect with an external circuit supplying a heat exchange fluid. In one embodiment, the heat exchange fluid is a coolant. The heat exchange fluid flows around the heat exchange tubes 104 enclosed within the shell 110 from the fluid inlet 118 and exits through the fluid outlet 120, which defines a second heat exchange circuit. The second heat exchange circuit is in heat exchange configuration with the first heat exchange circuit. The shell 110 is adapted to extend across the header plates 108A, 108B and enclose the tube bundle 104. Further, two opposing open ends 116A, 116B of the shell 110 mates with the respective header plates 108A, 108B and forms a fluid tight flow path for the coolant.

Referring to FIG. 1 to FIG. 3, the shell 110 includes a first shell portion 112 and a second shell portion 114. The fluid inlet (118) and the fluid outlet (120) are both formed on one of the shell portion (112, 114). In another embodiment, the fluid inlet (118) is formed on at least one shell portion (112, 114), for example, the first shell portion 112 and the fluid outlet (120) is formed on at least one shell portion (112, 114), for example, the second shell portion (114) (not shown in figures). The first shell portion 112 extends between the header plates 108A, 108B and encloses the first side 106A of the tube bundle 104 and at least partially the first extreme tube 104A. The second shell portion 114 extends between the header plates 108A, 108B and encloses the second side 106B of the tube bundle 104 and at least partially the second extreme tube 104B. The first shell portion 112 and the second shell portion 114 are distinct portions. The first shell portion 112 and the second shell portion 114 are each made of a bent metal plate and the plates are brazed together.

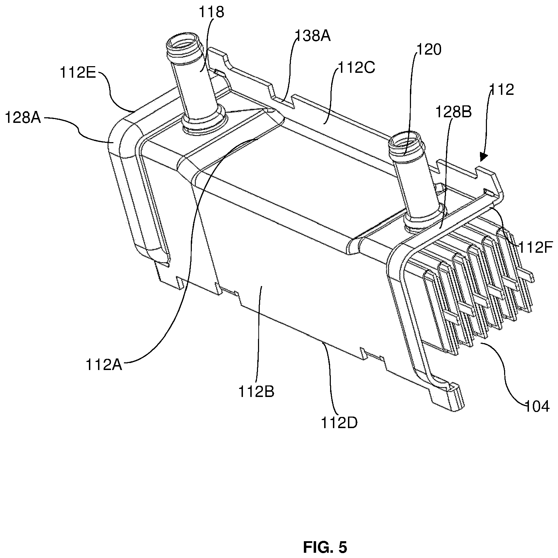

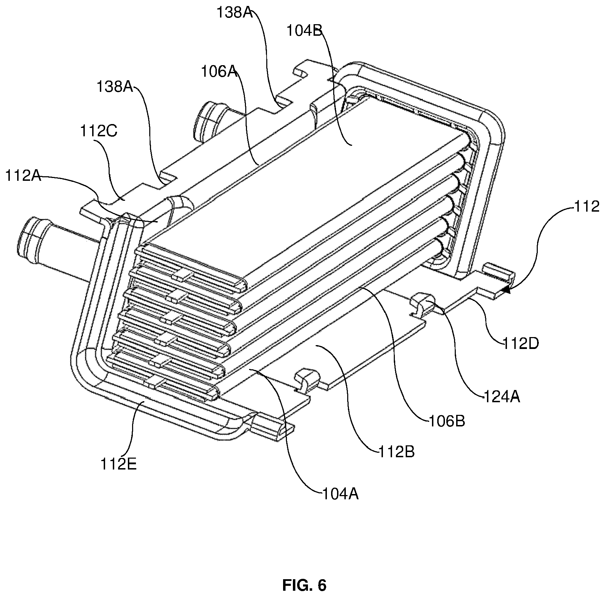

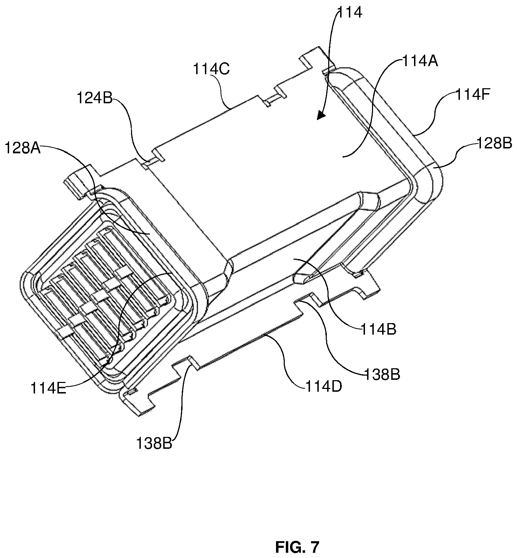

FIG. 5 exemplarily illustrates a perspective view of the first shell portion 112 enclosing at least a portion of the heater core 102 of FIG. 1. FIG. 6 exemplarily illustrates another perspective view of the first shell portion 112 enclosing at least a portion of the heater core 102 of FIG. 1. The first shell portion 112 comprises a first surface 112A extending according to a first plane and a second surface 112B extending according to a second plane perpendicular to the first plane thereby defining an L-shaped portion. FIG. 7 exemplarily illustrates the second shell portion 114 enclosing at least a portion of the heater core 102 of FIG. 1. The second shell portion 114 comprises a first surface 114A extending according to a first plane and a second surface 114B extending according to a second plane perpendicular to the first plane thereby defining an L-shaped portion.

Referring to FIG. 4 and FIG. 5, the first shell portion 112 comprises at least two longer edges 112C, 112D including a first longer edge 112C and a second longer edge 112D opposite to that of the first longer edge 112C. The second shell portion 112 comprises at least two longer edges 114C, 114D including a first longer edge 114C and a second longer edge 114D opposite to that of the first longer edge 114C.

The first shell portion 112 engages with the second shell portion 114 at their longer edges 112C, 112D, 114C, 114D forming the shell 110 having at least two open ends 116A, 116B. The two open ends 116A, 116B includes a first open end 116A and a second open end 116B. For example, the first longer edge 112C of the first shell portion 112 engages with the first longer edge 114C of the second shell portion 114 and the second longer edge 112D of the first shell portion 112 engages with the second longer edge 114D of the second shell portion 114. The longer edges 112C, 112D, 114C, 114D of the first shell portion 112 and the second shell portion 114 engages with one another to assemble the first shell portion together 112 with the second shell portion 114 and encloses the tube bundle 104. The first shell portion 112 and the second shell portion 114 together defines a four-sided tubular or hollow structure having four sides that correspond to the rectangular or square arrangement of the tubes 104. The tubular structure further includes two open ends 116A, 116B.

The first shell portion 112 further comprises at least two shorter edges 112E, 112F including a first shorter edge 112E and a second shorter edge 112F. The second shell portion 114 further comprises at least two shorter edges 114E, 114F including a first shorter edge 114E and a second shorter edge 114F. The first shorter edges 112E, 114E of the first shell portion 112 and the second shell portion 114 together defines the first open end 116A of the shell 110. The second shorter edges 112F, 114F of the first shell portion 112 and the second shell portion 114 together defines the second open end 116B of the shell 112. The first open end 116A is opposite to the second open end 116B of the shell 110.

Referring to FIG. 4, at least one open end 116A, 116B, for example, the first open 116A end engages with the first header plate 108A and at least one open end 116A, 116B, for example, the second end 116B engages with the second header plate 108B to seal the open ends 116A, 116B of the shell 110. In one embodiment, at least one flange 128A extends from the first shorter edges 112E, 114E of the first shell portion 112 and the second shell portion 114 and at least one flange 128B extends from the second shorter edges 112F, 114F of the first shell portion 112 and the second shell portion 114. The first header plate 108A may be secured to the flange 128A formed at the first open end 116A of the shell 110 and the second header plate 108B may be secured to the flange 128B formed at the second open end 116B of the shell 110. In another embodiment, the header plates 108A, 108B may be welded, brazed or joined to seal the respective open ends of the shell 110.

In one embodiment, one or more fastening means disposed on the shorter edges 112E, 112F, 114E, 114F of the first shell portion 112 and the second shell portion 114 (not shown in figures) to engage with the respective header plates 108A, 108B. The first shorter edges 112E, 114E of the first shell portion 112 and the second shell portion 112 engages with the first header plate 108A and seals at least one open end 116A of the shell 110. The second shorter edges 112F, 114F of the first shell portion 112 and the second shell portion 114 engages with the second header plate 108A and seals the another open end 116B of the shell 110. Thereby the shell 110 is adapted to enclose the heater core 102, defines the second heat exchange circuit for flow of coolant around the heat exchange tubes 104, and seals the open ends 116A, 116B to create the fluid tight shell 110.

The heater 100 further comprises one or more fastening means at a peripheral portion of at least one shell portion 112, 114 to lock the first shell portion 112 and the second shell portion 114 together. The one or more fastening means are arranged such that each fastening means is positioned at a specified distance from one another. In another embodiment, the fastening means may be arranged such that the fastening means be proximally positioned to one another. In one embodiment, the fastening means are crimping means having a planar body configured to crimp over the adjacent edge of the adjacent shell portion.

Referring to FIG. 6, the first shell portion 112 comprises one or more crimping means at the second longer edge 112D configured to crimp over the second longer edge 114D of the second shell portion 114. Referring to FIG. 7, the second shell portion 114 comprises one or more crimping means at the first longer edge 114C configured to crimp over the first longer edge 112C of the first shell portion 112. The crimping means comprises one or more crimping legs 124A, 124B to crimp over the extension surfaces of shell portions 112, 114.

Referring to FIG. 5 to FIG. 7, the first longer edges 112C, 114C of the first shell portion 112 and the second shell portion 114 extends in a same plane to fasten the corresponding edges 112C, 114C together. For example, the first longer edge 112C of the first shell portion 112 is bent perpendicular to the first plane of the respective shell portion 112 so that it may lie in same plane as that of the edge 114C of the second shell portion 114. The first longer edge 112C also referred as extension surface of the first shell portion 112. The second longer edge 114D of the second shell portion 114 is bent perpendicular to the second plane of the second shell portion 114 so that the second longer edge 114D of the first shell portion 112 and the second shell portion 114 extends in a same plane to fasten the corresponding edges 112D, 114D together. The extension surface of the first shell portion 112 contacts and lies in the same plane as the longer edge 114C of the second shell portion 114 and comprises one or more cut-out portions 138A to receive the crimping legs 124B of the second shell portion 112. The extension surface of the second shell portion 114 contacts and lies in the same plane as the longer edge 112D of the first shell portion 112 and comprises one or more cut-out portions 138B to receive the crimping legs 124A of the first shell portion 114.

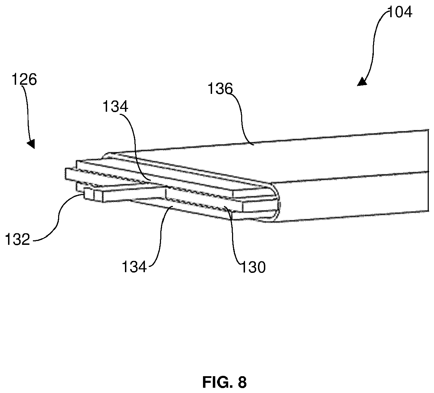

Referring to FIG. 8, the heating modules 126 are, for example, PTC resistors (for positive temperature coefficient). Each tube 104 may have several heating elements 130, which may be arranged one after the other in a direction of the tube 104. The heating elements 130 are preferably distributed evenly along the tubes 104. The tubes 104 together with the heating elements 130 form heating units. The heating units are preferably supplied with power selectively. This means that the heating elements 130 of each heating unit are supplied with current independently of the heating elements 130 of the other heating units. The heating units also have electrodes 132 on both sides of the heating elements 130 for their power supply. The said heating units further comprise electrically insulating and thermally conductive material layers 134, the said layers 134 being located between one of the electrodes 132 and a large wall 136 of the tube 104. In this way, the tube 104 is electrically insulated from the electrodes 132 and the heating elements 130 but thermally in contact with them.

Further, the L-shaped configuration of the first shell portion 112 and the second shell portion 114 together ensures hermetic sealing of the shell 110, facilitates ease of assembly, ensure no leakage of heat exchange fluid flowing therethrough and optimize thermal efficiency.

In any case, the invention cannot and should not be limited to the embodiments specifically described in this document, as other embodiments might exist. The invention shall spread to any equivalent means and any technically operating combination of means.

## Claims

1. An electric fluid heater (100) of a vehicle, comprising:
a heater core (102) having a tube bundle (104) extending between a first header plate (108A) and a second header plate (108B), wherein the tube bundle (104) has a first side (106A), a second side (106B) opposite to the first side (106A), a first extreme tube (104A) and a second extreme tube (104B), and each tube (104) having a heating module (126) therein defining a first heat exchange circuit, and
a shell (110) having a fluid inlet (118) and a fluid outlet (120) that encloses the core (102), the shell (110) defining a second heat exchange circuit for a fluid intended to flow between the inlet (118) and the outlet (120), **characterized in that**, the shell (110) comprises a first shell portion (112) and a second shell portion (114),
wherein the first shell portion (112) extends between the header plates (108A, 108B) and encloses the first side (106A) of the tube bundle (104) and at least partially the first extreme tube (104A) and the second shell portion (114) extends between the header plates (108A, 108B) and encloses the second side (106B) of the tube bundle (104) and at least partially the second extreme tube (104B).

2. The electric fluid heater (100) of claim 1, wherein the tube bundle (104) comprises a plurality of heat exchange tubes (104) and the heat exchange tubes (104) are arranged in a single row.

3. The electric fluid heater (100) according to one of the preceding claims, wherein the first shell portion (112) and the second shell portion (114) are distinct portions.

4. The electric fluid heater (100) according to one of the preceding claims, wherein the at least one shell portion (112, 114) comprises one or more fastening means at a peripheral edge thereof to assemble the shell portions (112, 114) together.

5. The electric fluid heater (100) according to one of claims 4 or 5, wherein each shell portion (112, 114) comprises at least two longer edges (112C, 112D, 114C, 114D) and at least two shorter edges (112E, 112F, 114E, 114F), and at least one fastening means is formed on each of the longer edge (112C, 112D, 114C, 114D) and the shorter edge (112E, 112F, 114E, 114F) of the shell portion (112, 114).

6. The electric fluid heater (100) according to one of the preceding claims, wherein the first shell portion (112) and the second shell portion (114) are each made of a bent metal plate and the plates are brazed together.

7. The electric fluid heater (100) as in one of the preceding claims, wherein each shell portion (112, 114) comprises a first surface (112A, 114A) extending according to a first plane and a second surface (112B, 114B) extending according to a second plane perpendicular to the first plane thereby defining an L-shaped portion.

8. The electric fluid heater (100) as in claim 7, wherein each shell portion (112, 114) comprises an extension surface, the extension surface of the first shell portion (112) is the longer edge (112C) of the first shell portion (112) bent to lie perpendicular to the first surface (112A) of the first shell portion (112), and the extension surface of the second shell portion (114) is the longer edge (114D) of the second shell portion (114) bent to lie perpendicular to the second surface (114B) of the second shell portion (114).

9. The electric fluid heater (100) as in the preceding claim, wherein each shell portion (112, 114) comprises one or more crimping legs (124A, 124B) to crimp over the extension surfaces of the shell portions (112, 114).

10. The electric fluid heater (100) as in the preceding claim, wherein the extension surface of the first shell portion (112) contacts and lies in the same plane as the longer edge (114C) of the second shell portion (114) and comprises one or more cut-out portions (138A) to receive the crimping legs (124B) of the second shell portion (112).

11. The electric fluid heater (100) as in one of claims 8 or 9, wherein the extension surface of the second shell portion (114) contacts and lies in the same plane as the longer edge (112D) of the first shell portion (112) and comprises one or more cut-out portions (138B) to receive the crimping legs (124A) of the first shell portion (114).

12. The electric fluid heater (100) as in one of the preceding claims, wherein the fluid inlet (118) and the fluid outlet (120) are both formed on one of the shell portion (112, 114).

13. The electric fluid heater (100) as in one of the preceding claims, wherein the fluid inlet (118) is formed on at least one shell portion (112, 114) and the fluid outlet (120) is formed on at least one shell portion (112, 114).

14. A method of assembling the electric fluid heater (100) according to one of the preceding claims in combination with one of claim 4 or 5, comprising the steps of:
fastening the first shell portion (112) and the second shell portion (114) using the fastening means, and
brazing the first shell portion (112) and the second shell portion (114) for ensuring a fluid tight second heat exchange circuit.

15. An electric fluid heater (100) of a vehicle, comprising:
a heater core (102) having a tube bundle (104) extending between a first header plate (108A) and a second header plate (108B), wherein the tube bundle (104) has a first side (106A), a second side (106B) opposite to the first side (106A), at least one first extreme tube (104A) and at least one second extreme tube (104B), and each tube (104) having a heating module (126) therein defining a first heat exchange circuit, and
a shell (110) having a fluid inlet (118) and a fluid outlet (120) that encloses the core (102), the shell (110) defining a second heat exchange circuit for a fluid intended to flow between the inlet (118) and the outlet (120), **characterized in that**, the shell (110) comprises a first shell portion (112) and a second shell portion (114), and each portion (112, 114) having a L-shaped configuration,
wherein the first shell portion (112) extends between the header plates (108A, 108B) and encloses the first side (106A) of the tube bundle (104) and at least partially the first extreme tube (104A) and the second shell portion (114) extends between the header plates (108A, 108B) and encloses the second side (106B) of the tube bundle (104) and at least partially the second extreme tube (104B).
